# EUROPÄISCHE PATENTSCHRIFT

(11) **EP 2 729 320 B1**
(45) Veröffentlichungstag und Bekanntmachung des Hinweises auf die Patenterteilung: **30.11.2016**
(21) Anmeldenummer: 12732539.7
(22) Anmeldetag: 29.06.2012
(51) Int. Cl.: B60K 28/04, B60K 28/12

(54) **VERFAHREN ZUM BETREIBEN EINES KRAFTFAHZEUGS MIT AUTOMATISCHER MOTORABSCHALTUNG**
METHOD FOR OPERATING A MOTOR VEHICLE WITH AUTOMATIC ENGINE SHUT-OFF
DISPOSITIF PERMETTANT DE FAIRE FONCTIONNER UN VÉHICULE ÉQUIPÉ D'UNE MISE À L'ARRÊT AUTOMATIQUE DU MOTEUR

(30) Priorität: 09.07.2011 DE 102011107005
(43) Veröffentlichungstag der Anmeldung: 14.05.2014
(73) Patentinhaber: Audi AG, 85045 Ingolstadt (DE)
(72) Erfinder: GEISSENHÖNER, Martin, 85055 Ingolstadt (DE)
(74) Vertreter: Brandt, Kai
(86) Internationale Anmeldenummer: PCT/EP2012/002734
(87) Internationale Veröffentlichungsnummer: WO 2013/007347

(56) Entgegenhaltungen:
- WO-A1-2006/027514
- DE-A1-102007 009 870

## Beschreibung

Die Erfindung betrifft ein Verfahren zum Betreiben eines Kraftfahrzeugs mit einem Motor.

Aus der US 5,219,413 A und der GB 2 424 505 A ist bekannt, bei laufendem Motor nach einem ersten vorbestimmten Kriterium zu prüfen, ob ein Fahrer des Kraftfahrzeugs anwesend ist, also insbesondere auf dem Fahrersitz des Kraftfahrzeugs sitzt. Bei Erfassen einer Abwesenheit des Fahrers erfolgt eine automatische Abschaltung des Motors.

Die bisherigen Realisierungen dieses Verfahrens haben den Nachteil, dass bei manchen Situationen eine Abschattung des Motors erfolgt, auch wenn diese gerade nicht erwünscht ist. Ein typischer Fall ist hier nach einem Erststart das Eiskratzen: Der Fahrerzeugführer begibt sich in das Fahrzeug, startet den Motor und verlässt das Fahrzeug sodann wieder, um Eis von den Scheiben des Kraftfahrzeugs abzukratzen. Hier ist gerade erwünscht, dass durch den sich erwärmenden Motor erzeugte warme Luft die Ablösung des Eises unterstützt. Je nach den klimatischen Bedingungen kann ein Erststart auch bewusst durch den Fahrer eingeleitet werden, um durch Einrichtungen des Fahrzeugs eine nachfolgende Fahrt mit dem Kraftfahrzeug vorzubereiten - so kann etwa der Motor warmlaufen gelassen werden oder durch eine Standklimatisierung für eine Erwärmung (oder umgekehrt eine Abkühlung) des Fahrgastraums gesorgt werden. Gegebenenfalls soll auch eine Batterie des Kraftfahrzeugs erwärmt werden.

Auch kann es sein, dass der Kraftfahrzeugführer vor einer Garage hält, um diese zu öffnen, dass er aber den Motor nicht abgeschaltet lassen möchte. Bei automatischer Abschaltung des Motors würde er dann einen Wiederstart einleiten, der Motor würde aber sogleich erneut abgeschaltet werden. Die nächstliegende WO 2006/027514 A1 offenbart Verfahren, bei denen der Motor automatisch abgeschaltet wird, wenn der Fahrer das Kraftfahrzeug verlässt. Um daraus resultierende gefährliche Situationen zu vermeiden, beschreibt die WO 2006/027514 A1 ein Verfahren zur Unterbindung der automatischen Motorabschaltung eines Kraftfahrzeugs bei einer Abwesenheit eines Fahrers. Bei diesem Verfahren wird bei laufendem Motor und detektierter Abwesenheit eines Fahrers der Motor nicht automatisch abgeschaltet. Des Weiteren wird bei abgeschaltetem Motor und detektierter Abwesenheit eines Fahrers der Motor automatisch angeschaltet. Falls der Fahrer eine Mindestzeitdauer abwesend ist, kann dennoch der Motor automatisch abgeschaltet werden. Es ist vorgesehen, dass nach diesem automatischen Abschalten der Motor nicht wieder automatisch gestartet werden kann, sondern ein Code zum Starten eingegeben werden muss.

Die DE 10 2007 009 870 A1 beschreibt ein Verfahren zur automatischen Steuerung eines An- und/oder Ausschaltvorgangs einer Brennkraftmaschine eines Kraftfahrzeugs mittels einer Start-Stopp-Einrichtung unter Einbezug verschiedener Kriterien, wie beispielsweise die Anwesenheit des Fahrers oder das aktiv sein eines Geschwindigkeitsregelsystems.

Es ist die Aufgabe der vorliegenden Erfindung, ein Verfahren zum Betreiben eines Kraftfahrzeugs gemäß dem Oberbegriff des Patentanspruchs 1 bereitzustellen, das der Tatsache Rechnung trägt, dass nicht in allen Situationen eine automatische Abschaltung des Motors erwünscht ist.

Die Aufgabe wird durch ein Verfahren mit den Merkmalen gemäß Patentanspruch 1 gelöst.

Erfindungsgemäß erfolgt somit die automatische Abschaltung nur dann, wenn das Kraftfahrzeug nach dem letzten Start des Motors (Zünden) gemäß einem zweiten vorbestimmten Kriterium bewegt wurde.

Die Erfindung beruht auf der Erkenntnis, dass sowohl der Erststart als auch der Wiederstart nach einer automatischen Abschaltung immer dann kein Fahren mit dem Kraftfahrzeug unmittelbar zur Folge haben, wenn die automatische Abschaltung nicht gewünscht ist; oder umgekehrt ausgedrückt: die automatische Abschaltung ist immer genau dann gewünscht, wenn der Fahrzeugführer das Kraftfahrzeug am Ende einer Fahrt verlässt.

Bei einer bevorzugten Ausführungsform der Erfindung beinhaltet das vorbestimmte zweite Kriterium, dass das Kraftfahrzeug überhaupt bewegt wurde, was man z. B. am Betätigen eines Fahrpedals (Gaspedals), am Lösen der Handbremse o. ä. erkennt. Genauso kann das vorbestimmte zweite Kriterium auch beinhalten, dass das Kraftfahrzeug über eine Mindeststrecke bewegt worden sein muss, oder auch über eine Mindestzeitdauer, denn dadurch kann verhindert werden, dass die automatische Abschaltung sofort einsetzt, wenn das Kraftfahrzeug nur kurz über eine minimale Strecke bewegt wurde.

Erfolgt das Prüfen nach dem ersten vorbestimmten Kriterium, ob ein Fahrer des Kraftfahrzeugs anwesend ist, ausschließlich zum Zwecke des eventuellen Auslösens der automatischen Abschaltung, so ist ein Prüfen nach dem ersten vorbestimmten Kriterium gar nicht notwendig, wenn das Kraftfahrzeug noch nicht bewegt wurde. Demgemäß ist es eine bevorzugte Ausführungsform der Erfindung, zur Vermeidung eines überflüssigen Prüfens selbiges erst dann einsetzen zu lassen, wenn eine Bewegung des Kraftfahrzeugs begonnen hat oder sobald das zweite vorbestimmte Kriterium erfüllt ist. Alternativ hierzu kann das Prüfen erfolgen, um ein Warnsignal auszusenden, damit ein das Kraftfahrzeug verlassender Fahrer weiß, dass keine automatische Abschaltung erfolgt.

Das erste vorbestimmte Kriterium kann in an sich bekannter Weise beinhalten, dass a) keine Pedale und/oder sonstige Bedienelemente betätigt werden (was man z. B. am Bremspedal erfassen kann), dass ferner alternativ oder insbesondere zusätzlich b) ein Gurtschloss des Fahrers geöffnet ist und dass ferner alternativ oder insbesondere zusätzlich c) eine Fahrertür geöffnet wurde.

Insbesondere in der Zusammenschau, dass kein Pedal betätigt ist, das Gurtschloss des Fahrers geöffnet ist und eine Fahrertür geöffnet wurde, lässt sich schließen, dass der Fahrzeugführer mit dem Betätigen der Pedale aufgehört hat, seinen Gurt gelöst (oder gar nicht erst angeschnallt) hat und durch die Fahrertür das Fahrzeug verlassen hat Das erste vorbestimmte Kriterium kann alternativ auch beinhalten, dass ein Sitzbelegungssensor die Anwesenheit des Fahrers gerade nicht erfasst. Gleiches gilt alternativ oder zusätzlich für eine auf den Fahrersitz gerichtete Kamera (mit integrierter oder nachgeordneter Bilderkennung).

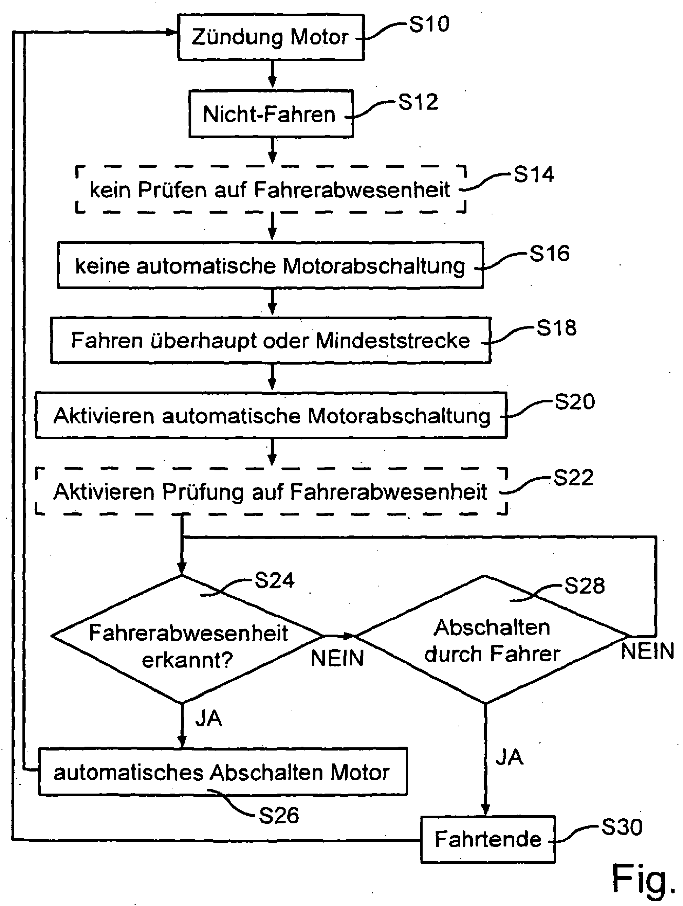

Nachfolgend wird eine bevorzugte Ausführungsform der Erfindung unter Bezug auf die Zeichnung näher beschrieben, in der die einzige
- Fig. 1: ein Flussschaubild zur Erläuterung einer Ausführungsform des erfindungsgemäßen Verfahrens ist.

In einem ersten Schritt S10 wird die Zündung eines Motors eines Kraftfahrzeugs betätigt, der Motor also gestartet bzw. eingeschaltet. Entweder einer sehr kurze Zeit oder aber einer längeren Zeit schließt sich dann in Schritt S12 eine Phase des Nicht-Fahrens des Kraftfahrzeugs an. Bei laufendem Motor soll vorliegend daraufhin geprüft werden, ob der Fahrer abwesend ist. Diese Prüfung ist aber optional in Schritt S14 vollständig außer Funktion gesetzt. Insbesondere erfolgt aber während der Phase des Nicht-Fahrens gemäß S16 keine automatische Motorabschaltung, entweder, weil wegen Schritt S14 gar nicht auf die Fahrerabwesenheit geprüft wird, oder wenn eine Fahrerabwesenheit erfasst wird, hat dies nicht eine automatische Motorabschaltung zur Folge.

In Schritt S18 wird nun das Kraftfahrzeug gefahren und es wird erfasst, dass das Fahren überhaupt erfolgt. Alternativ hierzu wird erfasst, dass das Fahren des Kraftfahrzeugs über eine Mindeststrecke oder für eine Mindestzeitdauer erfolgt. Ist dies der Fall, wird in Schritt S20 die Funktion einer automatischen Motorabschaltung aktiviert. Sofern gemäß S14 die Option gegeben war, dass kein Prüfen auf die Fahrerabwesenheit während des Nicht-Fahrens erfolgte, so wird nunmehr in Schritt S22 die Prüfung auf Fahrerabwesenheit aktiviert.

In Schritt S24 wird danach geprüft, ob die Fahrerabwesenheit nach einem bestimmten Kriterium erkannt wurde.

Beispielsweise kann die Fahrerabwesenheit daran erkannt werden, dass der Fahrzeugführer nicht die Bremse betätigt, dass das Gurtschloss nicht geschlossen ist, also niemand auf dem Fahrersitz angeschnallt ist, und dass die Tür des Fahrzeugs irgendwann nach Schritt S18 geöffnet wurde (und gegebenenfalls wieder geschlossen wurde). Wird die Fahrerabwesenheit erkannt, erfolgt in Schritt S26 ein automatisches Abschalten des Motors.

Solange nicht eine Fahrerabwesenheit erkannt wird, wird in Schritt S28 darauf geprüft, ob der Fahrzeugführer möglicherweise selbst den Motor abgeschaltet hat. Ist dies der Fall, endet die Fahrt in Schritt S30. Ist dies nicht der Fall, so wird Schritt S28 wiederholt durchgeführt, bis irgendwann der Schritt S26 oder S30 folgt.

Nach den Schritten S26 und S30 kann das Verfahren erst beim nächsten Start gemäß Schritt S10 wiederholt werden.

Dadurch, dass die Funktion der automatischen Motorabschaltung erst nach dem Fahren mit dem Kraftfahrzeug aktiviert wird, ist gewährleistet, dass ein Fahrzeugführer die Zündung einschalten kann und sodann das Kraftfahrzeug verlassen kann, wenn er noch nicht losfahren möchte, ohne dass der Motor automatisch abgeschaltet wird. Es kann gerade erwünscht sein, dass der Motor weiterläuft, etwa zum Zwecke der Klimatisierung des Fahrgastraums, einer Batterie, des Erwärmens bzw. Beheizens der Fahrzeugscheiben zum Zwecke von deren Enteisung; oder es kann sein, dass der Fahrzeugführer z. B. einfach ein Garagentor öffnen möchte, um anschließend mit dem Fahrzeug in die Garage einzufahren.

Für den Fall, dass die Schritte S14 und S22 nicht durchgeführt werden, kann in der Phase des Nicht-Fahrens optional auch tatsächlich ein Prüfen auf Fahrerabwesenheit erfolgen. Wird dann die Fahrerabwesenheit erkannt, erfolgt aber gerade nicht die automatische Motorabschaltung; stattdessen kann ein Warnsignal abgegeben werden, z. B. optisch oder akustisch oder kombiniert, um dem Fahrzeugführer verständlich zu machen, dass an sich eine Motorabschaltung erfolgen würde, weil er das Fahrzeug verlassen hat.

## Patentansprüche

1. Verfahren zum Betreiben eines Kraftfahrzeugs mit einem Motor, bei dem bei laufendem Motor nach einem ersten vorbestimmten Kriterium geprüft wird (S24), ob ein Fahrer des Kraftfahrzeugs anwesend ist, und wobei bei Erfassen einer Abwesenheit des Fahrers eine automatische Abschaltung des Motors (S26) nur dann erfolgt, wenn das Kraftfahrzeug nach dem letzten Starten des Motors (S10) gemäß einem zweiten vorbestimmten Kriterium bewegt wurde (S18).

2. Verfahren nach Anspruch 1,
**dadurch gekennzeichnet, dass**
das zweite vorbestimmte Kriterium beinhaltet, dass das Kraftfahrzeug überhaupt bewegt wurde.

3. Verfahren nach Anspruch 1, **dadurch gekennzeichnet, dass** das zweite vorbestimmte Kriterium beinhaltet, dass das Kraftfahrzeug über eine Mindeststrecke bewegt wurde.

4. Verfahren nach Anspruch 1,
**dadurch gekennzeichnet, dass**
das zweite vorbestimmte Kriterium beinhaltet, dass das Kraftfahrzeug für eine Mindestzeitdauer bewegt wurde.

5. Verfahren nach einem der Ansprüche 1 bis 4,
**dadurch gekennzeichnet, dass**
das Prüfen nach dem ersten vorbestimmten Kriterium nur dann erfolgt, wenn eine Bewegung des Kraftfahrzeugs begonnen hat.

6. Verfahren nach einem der Ansprüche 1 bis 4,
**dadurch gekennzeichnet, dass**
das Prüfen nach dem vorbestimmten Kriterium auch dann erfolgt, wenn eine Bewegung des Kraftfahrzeugs noch nicht begonnen hat, und dass bei Erfassen der Abwesenheit des Fahrers und Unterbindung der automatischen Abschaltung ein Warnsignal abgegeben wird.

7. Verfahren nach einem der vorhergehenden Ansprüche, **dadurch gekennzeichnet, dass** das erste vorbestimmte Kriterium beinhaltet, dass
a) keine Pedale und/oder sonstige Bedienelemente betätigt werden, und/oder
b) ein Gurtschloss des Fahrers geöffnet ist und/oder
c) eine Fahrertür geöffnet wurde.

8. Verfahren nach einem der vorhergehenden Ansprüche,
**dadurch gekennzeichnet, dass** das erste vorbestimmte Kriterium beinhaltet, dass ein Sitzbelegungssensor und/oder eine auf den Fahrersitz gerichtete Kamera nicht die Anwesenheit eines Fahrers erfasst.

## Claims

1. Method for operating a motor vehicle having an engine, in which, when the engine is running, a check is carried out (S24) according to a first predetermined criterion to see whether a driver of the motor vehicle is present, and wherein if the driver is found to be absent the engine is switched off automatically (S26) only if the motor vehicle has moved according to a second predetermined criterion (S18) after the last time of starting the engine (S10).

2. Method according to claim 1, **characterised in that** the second predetermined criterion includes that the motor vehicle has moved at all.

3. Method according to claim 1, **characterised in that** the second predetermined criterion includes that the motor vehicle has moved over a minimum distance.

4. Method according to claim 1, **characterised in that** the second predetermined criterion includes that the motor vehicle has moved for a minimum duration.

5. Method according to any one of claims 1 to 4, **characterised in that** the check according to the first predetermined criterion only occurs if a movement of the motor vehicle has begun.

6. Method according to any one of claims 1 to 4, **characterised in that** the check according to the predetermined criterion also takes place if a movement of the motor vehicle has not yet begun, and a warning signal is emitted if it is detected that the driver is absent and the automatic switching off is prevented.

7. Method according to any one of the preceding claims, **characterised in that** the first predetermined criterion includes that
a) no pedals and/or other operating elements are actuated, and/or
b) a seatbelt buckle of the driver is undone and/or
c) the driver's door has been opened.

8. Method according to any one of the preceding claims, **characterised in that** the first predetermined criterion includes that a seat occupancy sensor and/or a camera directed towards the driver's seat does not detect the presence of a driver.

## Revendications

1. Procédé servant à faire fonctionner un véhicule automobile avec un moteur, dans lequel, lorsque le moteur tourne, on vérifie (S24) selon un premier critère prédéfini si un conducteur du véhicule automobile est présent et, lorsque l'absence du conducteur est détectée, un arrêt automatique du moteur (S26) étant effectué que lorsque le véhicule automobile a été déplacé (S18) après le dernier démarrage du moteur (S10) selon un deuxième critère prédéfini.

2. Procédé selon la revendication 1,
**caractérisé en ce**
**que** le deuxième critère prédéfini contient le fait que le véhicule automobile a été globalement déplacé.

3. Procédé selon la revendication 1, **caractérisé en ce que** le deuxième critère prédéfini contient le fait que le véhicule automobile a été déplacé sur une distance minimale.

4. Procédé selon la revendication 1,
**caractérisé en ce**
**que** le deuxième critère prédéfini contient le fait que le véhicule automobile a été déplacé pendant une période minimale.

5. Procédé selon l'une quelconque des revendications 1 à 4,
**caractérisé en ce**
**que** la vérification selon le premier critère prédéfini n'est effectuée que lorsqu'un déplacement du véhicule automobile a commencé.

6. Procédé selon l'une quelconque des revendications 1 à 4,
**caractérisé en ce**
**que** la vérification selon le critère prédéfini est également effectuée quand un déplacement du véhicule automobile n'a pas encore commencé, et en ce que, lorsque l'absence du conducteur est détectée et que l'arrêt automatique est coupé, un signal d'avertissement est émis.

7. Procédé selon l'une quelconque des revendications précédentes, **caractérisé en ce que** le premier critère prédéfini contient le fait
a) qu'aucune pédale et/ou aucun autre élément de commande ne sont actionnés, et/ou
b) que la ceinture du conducteur n'est pas bouclée, et/ou
c) que la portière côté conducteur a été ouverte.

8. Procédé selon l'une quelconque des revendications précédentes,
**caractérisé en ce que** le premier critère prédéterminé contient le fait qu'un capteur d'occupation de siège et/ou une caméra dirigée vers le siège de conducteur ne détectent pas la présence d'un conducteur.
